# EUROPÄISCHE PATENTSCHRIFT

(11) **EP 4 116 121 B1**
(45) Veröffentlichungstag und Bekanntmachung des Hinweises auf die Patenterteilung: **24.06.2026**
(21) Anmeldenummer: 22182659.7
(22) Anmeldetag: 01.07.2022
(51) Int. Cl.: B60J 1/20

(54) **HALTER FÜR EIN FLÄCHENELEMENT EINER SONNENSCHUTZ- ODER VERDUNKELUNGSVORRICHTUNG**
HOLDER FOR A SURFACE ELEMENT OF A SUN PROTECTION OR DARKENING DEVICE
SUPPORT POUR UN ÉLÉMENT DE SURFACE D'UN DISPOSITIF DE PROTECTION SOLAIRE OU D'OBSCURCISSEMENT

(30) Priorität: 05.07.2021 DE 202021103616 U
(43) Veröffentlichungstag der Anmeldung: 11.01.2023
(73) Patentinhaber: Windesa GmbH, 49084 Osnabrück (DE)
(72) Erfinder: Borner, Norbert, 49078 Osnabrück (DE)
(74) Vertreter: Wischmeyer, André

(56) Entgegenhaltungen:
- WO-A1-2019/011783
- DE-A1- 10 002 950
- DE-U1- 202016 103 958
- US-A1- 2006 186 690

## Beschreibung

Die Erfindung betrifft einen Halter für ein Flächenelement einer Sonnenschutz- oder Verdunkelungsvorrichtung. Das Flächenelement ist zur Abdeckung einer Fensterscheibe mit einer Bespannung aus einem insbesondere dünnen Bespannungsmaterial und einem randseitig umlaufenden Rahmen versehen. Der Rahmen ist vorzugsweise als Spannrahmen ausgebildet. Der Halter weist ein Aufnahmeelement zur Ausbildung eines Aufnahmeraumes auf, der von einer Aufnahmeöffnung begrenzt ist. In den Aufnahmeraum ist ein Abschnitt des Rahmens, der vorzugsweise mit dem Bespannungsmaterial überdeckt ist, durch die Aufnahmeöffnung in eine Aufnahmerichtung und entgegen einen Aufnahmeanschlag des Aufnahmeelementes einzuführen, der der Aufnahmeöffnung gegenüberliegt. Das Aufnahmeelement ist in einem Ebenenzwischenraum angeordnet, der durch zwei zur Aufnahmerichtung parallele und zu einer Querschnittsebene rechtwinklige Ebenen begrenzt ist.

Ein derartiger Halter ist etwa aus die DE 100 02 950 A1, US 2006/186690 A1 und WO 2019/011 783 A1 bekannt. Hier ist der Halter zum Halten des Flächenelementes an einer Fensterscheibe eines Kraftfahrzeuges ausgebildet. Dazu ist ein sich in die Aufnahmerichtung erstreckendes Einsteckelement des Halters zwischen eine Dichtung und ein Verkleidungsteil des Kraftfahrzeuges einzustecken. Nachteilig ist der bekannte Halter insofern, als er einzig zum Halten des Flächenelementes in einem geeigneten Kraftfahrzeug einzusetzen ist.

Aufgabe der vorliegenden Erfindung ist die Bereitstellung eines gattungsgemäßen Halters zur zuverlässigen Festlegung des Flächenelementes in weiteren Anwendungsfällen sowie des Flächenelementes dazu und die resultierende Sonnenschutz- oder Verdunkelungsvorrichtung.

Erfindungsgemäß wird die Aufgabe durch einen Halter gelöst, der ein sich von dem Aufnahmeelement weg erstreckendes Abstandselement aufweist. Das Abstands-element weist zumindest ein vom Aufnahmeelement abgewandtes Ende auf, das zur Positionierung des Flächenelementes in einem Fensterrahmenprofil ausgebildet ist und außerhalb des Ebenenzwischenraums angeordnet ist.

Der Halter ist insbesondere dazu ausgebildet, dass Flächenelement derart in dem Fensterrahmenprofil zu halten, dass sich das Flächenelement zumindest im geschlossenen Zustand des Fensters parallel dazu erstreckt. Der Halter ermöglicht eine Fixierung des Flächenelementes innerhalb desjenigen Fensterrahmenprofils, das ortsfest zu einem den Fensterrahmen umgebenden Mauerwerk oder dergleichen angeordnet ist. Der Halter ist zu einem Halten des Flächenelementes innerhalb eines Hohlraums zwischen dem genannten Fensterrahmenprofil und einem daran schwenkbeweglich angeordneten, geschlossenen Faltflügel ausgebildet. Dabei ist der Halter insbesondere derart anzuordnen, dass sein Querschnitt rechtwinklig zur flächigen Erstreckung des Fensters verläuft.

Bevorzugt ist der Rahmen des Flächenelementes zu seinem Einbau in das Fensterrahmenprofil zunächst durch die Aufnahmeöffnung in die Aufnahmerichtung bis zum Aufnahmeanschlag in den Aufnahmeraum einzuführen. Insbesondere sind unterschiedliche Rahmenabschnitte in Aufnahmeräume unterschiedlicher Halter einzuführen. Anschließend ist das Flächenelement zusammen mit dem Halter bzw. den Haltern in das Fensterrahmenprofil einzusetzen, wobei der Faltflügel geöffnet ist. Daraufhin hat das vom Aufnahmeelement abgewandten Abstandselementende an einer ersten zum Fenster insbesondere parallelen Grenzfläche des Fensterrahmenprofils angeordnet zu sein, um das Flächenelement von der ersten Grenzfläche zu beabstanden. Insbesondere wird das Flächenelement und/oder das Aufnahmeelement durch das Abstandselement gegen eine zweite, der ersten gegenüberliegende Grenzfläche gedrückt, wobei der Halter mit einer von der Mitte des Flächenelementes abgewandten Seite an einer die Grenzflächen verbindenden Fensterrahmengrundfläche anliegt. Die zweite Grenzfläche ist insbesondere eine Fläche, an der der Faltflügel im geschlossenen Zustand bei Abwesenheit des Flächenelementes zumindest stellenweise anliegt.

Gemäß der erfindungsgemäßen Ausbildung des Abstandselementes erstreckt sich dieses bei Betrachtung des Halters in die Aufnahmerichtung seitlich vom Aufnahmeelement weg. Im eingesetzten Zustand erstreckt sich das Abstandselement insbesondere zumindest im Wesentlichen rechtwinklig zu der Bespannungsmaterialebene, in der sich das Bespannungsmaterial hauptsächlich erstreckt, vom Aufnahmeelement weg. Die Aufnahmerichtung ist hierbei zumindest anteilig parallel zur genannten Bespannungsmaterialebene bzw. um weniger als 90° dazu angewinkelt.

Durch diese Ausbildung des Halters lässt sich das Flächenelement zuverlässig innerhalb des Fensterrahmenprofils fixieren, ohne dass dabei das Bespannungsmaterial durch das Abstandselement belastet wird und ohne dass die Funktionen des Faltflügels beeinträchtigt würden.

Das Aufnahmeelement, das Abstandselement und/oder der gesamte Halter sind/ist insbesondere einstückig ausgebildet. Das Abstandselement und insbesondere das Aufnahmeelement weisen bevorzugt eine zumindest im Wesentlichen einheitliche Dicke auf, die der Breite im Querschnitt entspricht. Der Halter ist vorzugsweise aus einem Kunststoff ausgebildet. Bevorzugt ist der Querschnitt des Aufnahmeraums oder Halters in eine zum Querschnitt rechtwinklige Richtung unveränderlich. Dazu ist der Halter besonders bevorzugt durch ein Extrusionsverfahren hergestellt.

Die Aufnahmeöffnung erstreckt sich bevorzugt zwischen zwei Enden des Aufnahmeelementes. Die Aufnahmeöffnung ist als zum Querschnitt rechtwinklige Grenzfläche im Querschnitt als gerade Linie zwischen den Enden anzusehen. Die Aufnahmerichtung ist insbesondere rechtwinklig zu dieser Linie angeordnet und weist durch die Aufnahmeöffnung auf den gegenüberliegenden Aufnahmeanschlag.

Erfindungsgemäß erstreckt sich das Abstandselement vom Aufnahmeelement in dem Querschnitt angewinkelt zur Aufnahmerichtung weg. Das bedeutet insbesondere, dass eine dem Abstandselementende gegenüberliegende Wurzel des Abstandselementes im Querschnitt einer Haupterstreckungsrichtung hat, die von der Aufnahmerichtung abweicht. Erfindungsgemäß ist zumindest ein an das Aufnahmeelement angrenzender Abschnitt des Abstandselements um zumindest 60°, besonders bevorzugt um zumindest 75° zur Aufnahmerichtung angewinkelt. Durch diese Ausbildung lässt sich eine kompakte Bauweise des Halters erreichen und der Abstand durch einen minimalen Materialaufwand herstellen. Außerdem erlaubt diese Ausbildung eine Anordnung des Rahmens nahe an der Fensterrahmengrundfläche und dadurch eine erhöhte Stabilität. Zu diesem Zweck ist das Abstandselement unmittelbar am Aufnahmeanschlag angeordnet. Vorzugsweise ist zwischen einer zum Querschnitt rechtwinkligen Halteranlagefläche und dem Halter ein zur Querschnittsebene rechtwinklig durchgehender Hohlraum ausgebildet. Die Halteranlagefläche berührt den Halter in zumindest zwei dessen Querschnittskontur mit ausbildenden und sich insbesondere in gegenüberliegenden Endbereichen des Halters angeordneten Punkten. Die Halteranlagefläche schneidet die Kontur nicht. Die Fensterrahmengrundfläche erstreckt sich insbesondere in der Halteranlagefläche. Der Aufnahmeraum ist dabei zwischen der Aufnahmeöffnung und der Halteranlagefläche angeordnet. Einer der Punkte wird insbesondere durch das vom Aufnahmeelement abgewandte Abstandselementende ausgebildet. Der weitere der Punkte wird insbesondere vom Aufnahmeelement oder von der Wurzel des Abstandselementes ausgebildet. Der Hohlraum erstreckt sich insbesondere bis zu beiden Punkten und zwischen den Punkten durchgängig bis zur Halteranlagefläche und wird auf der gegenüberliegenden Seite bevorzugt von einer Seite des Halters begrenzt, die im montierten Zustand vom Flächenelement abgewandt ist.

Der Halter bzw. das Abstandselement ist dazu vorzugsweise um den Hohlraum gekrümmt und/oder abgewinkelt ausgebildet. Der Hohlraum hat bevorzugt eine parallel zur Halteranlagefläche gemessene Breite bzw. Länge, die zumindest halb so groß ist wie die in dieselbe Richtung gemessene Breite bzw. Länge des Halters. Der Hohlraum dient dazu, dass Wasser innerhalb des Fensterrahmenprofils trotz des eingesetzten Halters noch quer zur Querschnittsebene, d. h. in die Umfangsrichtung des Fensterrahmens, zuverlässig abfließen kann.

Das Abstandselement weist bevorzugt zumindest einen ersten Abstandselementschenkel und zumindest einen zweiten Abstandselementschenkel auf. Der erste Abstandselementschenkel ist an dem Aufnahmeelement angeordnet. Der zweite Abstandselementschenkel ist vom Aufnahmeelement beabstandet. Die Haupterstreckungsrichtung des ersten Abstandselementschenkels ist im Querschnitt zur Haupterstreckungsrichtung des zweiten Abstandselementschenkel um einen Schenkelwinkel verschwenkt. Die Abstandselementschenkel schließen einen stumpfen Hohlraumwinkel ein. Insbesondere wird der Hohlraum durch die zueinander angewinkelten Abstandselementschenkel ausgebildet. Im montierten Zustand ist die Haupterstreckungsrichtung des ersten Abstandselementschenkels zur Halteranlagefläche bevorzugt weiter angewinkelt als die Haupterstreckungsrichtung des Zweiten Abstandselementschenkel zur Halteranlagefläche. Die Abstandselementschenkel sind bevorzugt zumindest im Wesentlichen flach, d.h. im Querschnitt geradlinig, bzw. plattenförmig und/oder einstückig miteinander ausgebildet. Die Abstandselementschenkel stellen eine einfache Möglichkeit zur Ausbildung des Hohlraumes dar und bieten zusätzlich die Möglichkeit zum zerstörungsfreien Aufbringen einer Klemmkraft zum Klemmen des Halters mit dem Flächenelement zwischen den Grenzflächen des Fensterrahmenprofils.

Bevorzugt ist der zweite Abstandselementschenkel im Querschnitt länger als der erste Abstandselementschenkel. Besonders bevorzugt ist der zweite Absatzelementschenkel im Querschnitt zumindest doppelt so lang oder zumindest dreimal so lang wie der erste Abstandselementschenkel. Hierdurch lässt sich zum einen die Klemmkraft besonders vorteilhaft ausbilden. Zum anderen ist es durch diese Ausbildung möglich, den Halter an unterschiedliche Fensterprofile mit unterschiedlichen Abständen zwischen den Grenzflächen anzupassen. Dazu ist der zweite Abstandselementschenkel, je nach Abstand, einzukürzen. Wenn er länger ist als der erste Abstandselementschenkel ist der Halter an einen besonders großen Umfang von Fensterrahmenprofilen und deren jeweilige Abstände anzupassen.

Vorzugsweise weist das Abstandselement zwischen dem ersten Abstandselementschenkel und dem zweiten Abstandselementschenkel einen Verbindungsbereich auf. Der Verbindungsbereich ist im Querschnitt insbesondere zumindest teilweise bogenförmig, insbesondere kreisbogenförmig, ausgebildet. Der Verbindungsbereich erstreckt sich insbesondere oberhalb einer Bogenmittelachse, um die er sich bogenförmig erstreckt. Der Verwendungsbereich bildet den Hohlraum bevorzugt mit aus. Ein derartiger Verbindungsbereich erlaubt eine einfachere Verklemmung des Halters im Fensterrahmenprofil. Insbesondere ermöglicht er eine einstückige Ausbildung des Abstandselementes und zusätzlich eine signifikante realisierbare Beweglichkeit der Abstandselementschenkel zueinander. Diese Funktion erreicht einen besonders großen Umfang, wenn der bogenförmige Verbindungsbereich einen Mittelpunktsbogenwinkel einschließt, der größer als, bevorzugt zumindest doppelt so groß wie der Schenkelwinkel ist. In einer Ausführungsform der Erfindung weist das Abstandselement den Verbindungsbereich auf, der insbesondere den Hohlraum ausbildet, jedoch keine zueinander angewinkelten Abstandselementschenkel auf. Hierdurch ist der Halter besonders platzsparend.

Das Aufnahmeelement ist bevorzugt derart ausgebildet, dass es den Aufnahmeraum zumindest abschnittsweise zumindest im Wesentlichen bogenförmig umgrenzt. Insbesondere umgrenzt es den Aufnahmeraum zu einem überwiegenden Teil bogenförmig, besonders bevorzugt kreisbogenförmig. Durch diese Ausbildung ist der Rahmen des Flächenelementes besonders zuverlässig aufzunehmen.

Vorzugsweise hat die Aufnahmeöffnung im Querschnitt eine geringere Erstreckung als der Aufnahmeraum in eine zur Aufnahmeöffnung parallele Richtung. Das bedeutet insbesondere, dass das Aufnahmeelement den Aufnahmeraum zu einem überwiegenden Teil umgibt. Die lichte Weite der Aufnahmeöffnung ist im Querschnitt geringer als die lichte Weite des Aufnahmeraums. Durch diese Ausbildung des Aufnahmeelementes und insbesondere eine zumindest geringfügige Elastizität des Aufnahmeelementes lässt sich insofern eine zuverlässige Festlegung des Halters am Flächenelement erzeugen, als die Aufnahmeöffnung beim Einführen des Rahmens durch erhöhten Kraftaufwand aufzuweiten ist und im montierten Zustand verhindert, dass der Halter sich selbstständig vom Flächenelement löst.

Zum vorbezeichneten Zweck weist das Aufnahmeelement bevorzugt zwei Rasterelemente auf, die von unterschiedlichen Seiten an die Aufnahmeöffnung angrenzen und/oder zueinander zur Vergrößerung der Aufnahmeöffnung beweglich ausgebildet sind. Die Rastelemente dienen zur Verrastung des Rahmens des Flächenelementes im Aufnahmeraum. Die Rastelemente sind insbesondere zumindest im Wesentlichen gleichartig, bevorzugt zumindest im Wesentlichen spiegelsymmetrisch zu einer zur Aufnahmerichtung parallelen Spiegelebene ausgebildet. Insbesondere erstrecken sie sich jeweils vom Aufnahmeanschlag bis zur Aufnahmeöffnung.

Die Aufgabe wird weiterhin gelöst durch ein Flächenelement zur Abdeckung einer Fensterscheibe. Das Flächenelement weist eine Bespannung aus einem Bespannungsmaterial und einen randseitig umlaufenden Rahmen auf. Der Rahmen ist vorzugsweise als Spannrahmen ausgebildet und/oder zumindest im Wesentlichen rechtwinklig ausgeformt. Der Rahmen weist zumindest ein längliches Rahmenelement auf, das bevorzugt als Draht ausgebildet ist. Erfindungsgemäß erstrecken sich zwei einander zugewandte Rahmenelementende des einen oder unterschiedlicher der Rahmenelemente in eine Rahmenhülse. Die Rahmenhülse ist relativ zu zumindest einem der Rahmenelementenden drehbar um eine Längsmittelachse der Rahmenhülse. Die Drehbarkeit ermöglicht eine einfache und zerstörungsfreie Faltung des Flächenelementes, wodurch es auch bei großen Gebäudefenstern praktikabel einsetzbar und zu ihnen transportabel ist. Bevorzugt weist das Flächenelement zumindest zwei Rahmenelemente und zumindest zwei Rahmenhülse auf, die sich insbesondere mittig entlang der Längsseiten befinden. Hierdurch lassen sich die Enden des Flächenelementes, an denen sich die Breitseiten befinden, zueinander um 180° verdrehen und aufeinander falten. Bevorzugt weist die Rahmenhülse oder zumindest eines der Rahmenelementenden ein Widerlager auf, das eine Bewegung der Rahmenhülse relativ zum Rahmenelementende in Richtung der Längsmittelachse und damit ein Herausrutschen des Rahmenelementendes aus der Rahmenhülse vermeidet. Besonders bevorzugt ist eines der beiden Rahmenelementenden innerhalb Rahmenhülse zur Rahmenhülse ortsfest angeordnet.

Vorzugsweise weist das zumindest eine Rahmenelement entlang seiner Längserstreckung eine Spannbiegestelle auf, an der das Rahmenelement um weniger als 90°, insbesondere um höchstens 10° gebogen ausgebildet ist, wobei es insbesondere nach innen gebogen ausgebildet ist. Die Spannbiegestelle ist von den insbesondere gerundeten Ecken des Rahmens, in denen die Längsseiten an die Breitseiten grenzen, bevorzugt beabstandet. Die Spannbiegestelle ermöglicht auf einfache Weise ein einklemmen des Flächenelementes im Fensterrahmenprofil und damit eine Entlastung der Halter und einen zuverlässigen Sitz des Flächenelementes. In bestimmten Anwendungsfällen ist das Rahmenelement mit der zumindest einen Spannbiegestelle auch unabhängig von der Rahmenhülse vorteilhaft.

Die Aufgabe wird weiterhin gelöst durch eine Sonnenschutz- oder Verdunkelungsvorrichtung. Diese umfasst das vor- oder nachbeschriebene Flächenelement zur Abdeckung einer Fensterscheibe. Erfindungsgemäß weist die Sonnenschutz- oder Verdunkelungsvorrichtung zumindest einen vor oder nach beschriebenen Halter auf, wobei der Rahmen des Flächenelementes zumindest teilweise im Aufnahmeraum des Halters angeordnet ist.

Weitere Einzelheiten und Vorteile der Erfindung sind den nachfolgend beschriebenen, schematisch dargestellten Ausführungsbeispielen zu entnehmen; es zeigen:
- Fig. 1: einen ersten erfindungsgemäßen Halter in einem Querschnitt,
- Fig. 2: den ersten Halter mit einem Teil eines Flächenelementes in einem Fensterrahmenprofil,
- Fig. 3: einen zweiten erfindungsgemäßen Halter in einer perspektivischen Darstellung,
- Fig. 4: eine erfindungsgemäße Sonnenschutz- oder Verdunkelungsvorrichtung in einer perspektivischen Darstellung,
- Fig. 5: einen Rahmen eines erfindungsgemäßen Flächenelementes in einer Draufsicht.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1. Sofern sinnvoll sind funktional gleichwirkende Teile mit identischen Bezugsziffern versehen.

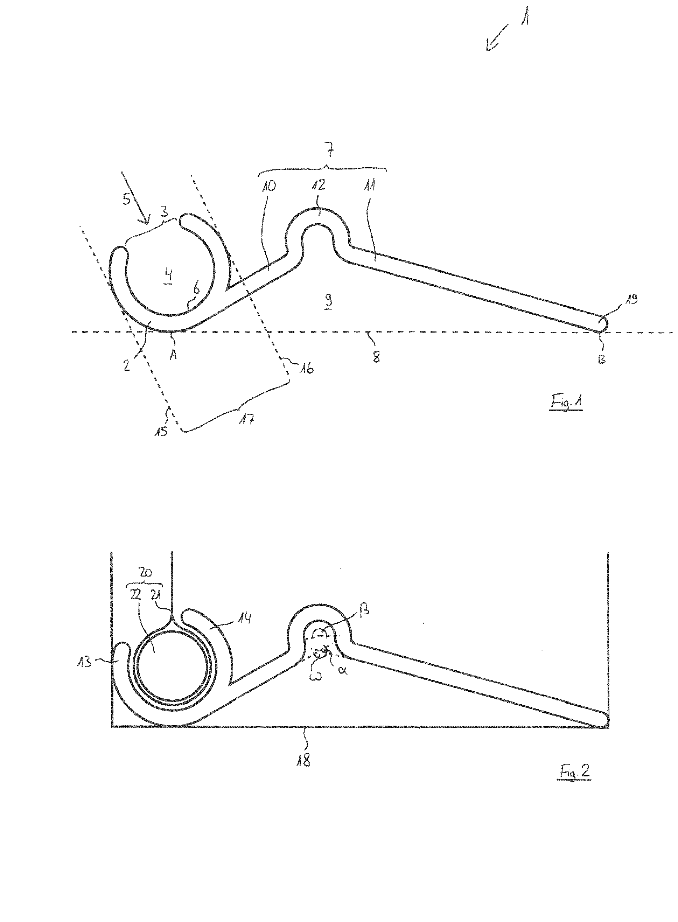

Erfindungsgemäße Halter 1 werden von den Fig. 1 - 3 gezeigt. Sie dienen zum Halten eines Flächenelementes 20, wovon in Fig. 2 ein Rahmen 22 und Bespannungsmaterial 21 abschnittsweise gezeigt sind. Die Halter 1 weisen ein Aufnahmeelement 2 auf. Dieses dient zur Ausbildung eines von einer Aufnahmeöffnung 3 begrenzten Aufnahmeraumes 4. In diesen ist ein Abschnitt des vorzugsweise mit dem Bespannungsmaterial 21 überdeckten Rahmens 22 durch die Aufnahmeöffnung 3 in eine Aufnahmerichtung 5 einzuführen (Fig. 1) bzw. eingeführt (Fig. 2). Die Aufnahmerichtung 5 ist dabei entgegen einen der Aufnahmeöffnung 3 gegenüberliegenden Aufnahmeanschlag 6 gerichtet. Das Aufnahmeelement 2 ist in einem Ebenenzwischenraum 17 angeordnet, der durch zwei zur Querschnittsebene rechtwinklige Ebenen 15, 16 begrenzt ist, die zur Aufnahmerichtung 5 parallel verlaufen.

Erfindungsgemäß weisen die Halter 1 ein sich von dem Aufnahmeelement 2 weg erstreckendes Abstandselement 7 auf. Das Abstandselement 7 umfasst ein von dem Aufnahmeelement 2 abgewandtes Abstandselementende 19. Das Abstandselementende 19 ist zur Positionierung des Flächenelementes 20 in einem Fensterrahmenprofil 18 außerhalb des Ebenenzwischenraum 17 angeordnet. Dazu erstreckt sich das Abstandselement 7 angewinkelt zur Aufnahmerichtung 5 vom Aufnahmeelement 2 weg.

Der Halter 1 gemäß Fig. 1 bildet zwischen sich und einer Halteranlagefläche 8 einen Hohlraum 9 aus. Die Halteranlagefläche 8 berührt die gezeigte Querschnittskontur des Halters 1 in zwei Punkten A und B. Diese sind in sich gegenüberliegenden Endbereichen des Halters 1 angeordnet. Die Halteranlagefläche 8 ist dabei derart angeordnet, dass der Aufnahmeraum 4 zwischen der Aufnahmeöffnung 3 und der Halteranlagefläche 8 angeordnet ist, sodass die Halteranlagefläche 8 derjenigen Fläche des Fensterrahmenprofil 18 entspricht, an der der Halter 1 im Einsatz mit einer dem Flächenelement gegenüberliegenden Seite anliegt.

Das Abstandselement 7 weist einen am Aufnahmeelement 6 angeordneten, ersten Abstandselementschenkel 10 und einen vom Aufnahmeelement 2 beabstandeten, zweiten Abstandselementschenkel 11 auf. Die Haupterstreckungsrichtungen der Abstandselementschenkel 10, 11 sind zueinander um den Schenkelwinkel α angewinkelt. Somit bilden die Abstandselementschenkel 10, 11 den Hohlraum 9 mit einem stumpfen Hohlraumwinkel ω mit aus.

Zwischen dem ersten Abstandselementschenkel 10 und dem zweiten Abstandselementschenkel 11 weist das Abstandselement 7 einen Verbindungsbereich 12 auf. Dieser ist im dargestellten Querschnitt kreisbogenförmig ausgebildet und bildet den Hohlraum 9 mit aus. Der Verbindungsbereich 12 schließt einen Mittelpunktsbogenwinkel β ein, der größer als der Schenkelwinkel α ist.

Das Aufnahmeelement 2 umgrenzt den Aufnahmeraum 4 kreisbogenförmig. Dazu weist das Aufnahmeelement 2 zumindest zwei an die Aufnahmeöffnung 3 angrenzende und zueinander bewegliche Rasterelemente 13, 14 auf. Diese bilden die Aufnahmeöffnung 3 im Querschnitt derart aus, dass sie eine geringere Erstreckung hat als der Aufnahmeraum 4 in eine zur Aufnahmeöffnung 3 parallele Richtung. Die Rastelemente 13,14 sind zueinander derart beweglich, dass die Aufnahmeöffnung 3 zur Aufnahme des Rahmens 22 zeitweilig zu vergrößern ist.

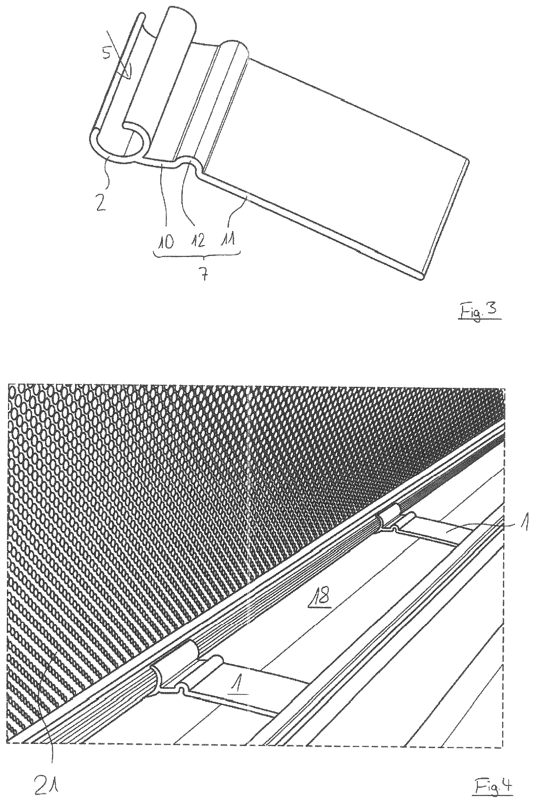

Fig. 4 zeigt eine erfindungsgemäße Sonnenschutz- oder Verdunkelungsvorrichtung 30. Diese weist einen Flächenelement 20 mit einem Bespannungsmaterial 21 und einem nicht sichtbaren Rahmen 22 auf. Ferner weist sie zwei erfindungsgemäße Halter 1 auf. Der Rahmen 22 ist in die Aufnahmeräume 4 der Halter 1 eingeführt. Die Halter 1 sind im Fensterrahmenprofil 18 angeordnet. Durch die Halter 1 wird das Flächenelement 20 in der gegebenen Perspektive nach links gegen eine vom Flächenelement 20 verdeckte Grenzfläche des Fensterrahmenprofils 18 gedrückt.

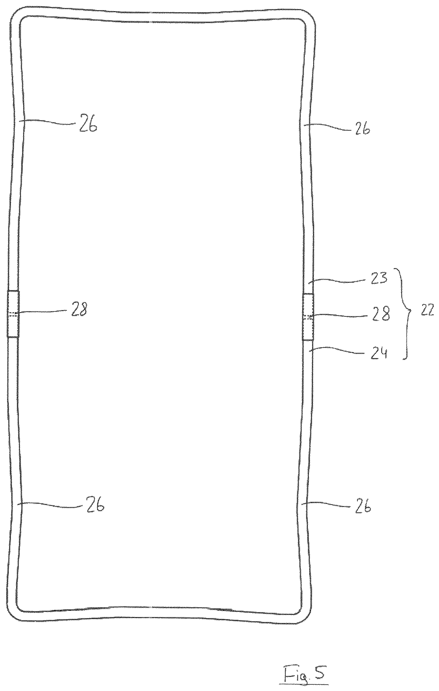

Fig. 5 zeigt einen Rahmen 22 eines erfindungsgemäßen Flächenelementes 20. Dieser weist zwei Rahmenelemente 23,24 auf, die mittig im Bereich von Längsseiten des Rahmens 22 durch Rahmenhülsen 28 miteinander verbunden sind. In jede der Rahmenhülsen 28 erstrecken sich zwei Rahmenelementenden, eines des einen Rahmenelementes 23 und eines des anderen Rahmenelementes 24, von gegenüberliegenden Seiten. Zumindest eines davon ist relativ zur Rahmenhülse 28 um deren Längsmittelachse derer drehbar. Dadurch lässt sich der Rahmen 22 und mit ihm das gesamte Flächenelement 20 einfach zueinander verdrehen und zusammenfalten.

Der gezeigte Rahmen 22 weist vier Spannbiegestellen 26 auf, an denen das Rahmenelement 20 um weniger als 10° nach innen gebogen ist. Dadurch hat der Rahmen 22 zumindest in seine Längsrichtung eine erhöhte Flexibilität und lässt sich einfacher in das Fensterrahmenprofil 18 einklemmen.

## Patentansprüche

1. Halter (1) für ein Flächenelement (20) einer Sonnenschutz- oder Verdunklungsvorrichtung, welches zur Abdeckung einer Fensterscheibe mit einer Bespannung aus einem dünnen Bespannungsmaterial (21) und einem randseitig umlaufenden, vorzugsweise als Spannrahmen ausgebildeten Rahmen (22) versehen ist, wobei der Halter (1) ein Aufnahmeelement (2) zur Ausbildung eines von einer Aufnahmeöffnung (3) begrenzten Aufnahmeraumes (4), in den ein Abschnitt des vorzugsweise mit dem Bespannungsmaterial (21) überdeckten Rahmens (22) durch die Aufnahmeöffnung (3) in eine Aufnahmerichtung (5) und entgegen einen der Aufnahmeöffnung (3) gegenüberliegenden Aufnahmeanschlag (6) des Aufnahmeelementes (2) einzuführen ist, aufweist, wobei das Aufnahmeelement (2) in einem durch zwei zur Aufnahmerichtung (5) parallele und zu einer Querschnittsebene rechtwinklige Ebenen (15, 16) begrenzten Ebenenzwischenraum (17) angeordnet ist, wobei der Halter ein sich von dem Aufnahmeelement (2) wegerstreckendes Abstandselement (7) umfassend zumindest ein vom Aufnahmeelement (2) abgewandtes Abstandselementende (19) aufweist, das zur Positionierung des Flächenelementes (20) in einem Fensterrahmenprofil (18) außerhalb des Ebenenzwischenraumes (17) angeordnet ist, wobei das Abstandselement unmittelbar am Aufnahmeanschlag angeordnet ist, wobei sich das Abstandselement (7) vom Aufnahmeelement (2) in einem Querschnitt angewinkelt zur Aufnahmerichtung (5) wegerstreckt, **dadurch gekennzeichnet, dass** zumindest ein an das Aufnahmeelement (2) angrenzender Abschnitt des Abstandselementes (7) um zumindest 60° zur Aufnahmerichtung (5) angewinkelt ist.

2. Halter (1) nach Anspruch 1, **dadurch gekennzeichnet, dass** der an das Aufnahmeelement (2) angrenzende Abschnitt des Abstandselementes (7) um zumindest 75° zur Aufnahmerichtung (5) angewinkelt ist.

3. Halter (1) nach einem der vorhergehenden Ansprüche, **dadurch gekennzeichnet, dass** zwischen einer zum Querschnitt rechtwinkligen Halteranlagefläche (8), die den Halter (1) in zumindest zwei dessen Querschnittskontur mitausbildenden und sich insbesondere in sich gegenüberliegenden Endbereichen des Halters (1) angeordneten Punkten (A, B) berührt und die Kontur nicht schneidet, und dem Halter (1) ein zur Querschnittsebene rechtwinklig durchgehender Hohlraum (9) ausgebildet ist, wobei der Aufnahmeraum (4) zwischen der Aufnahmeöffnung (3) und der Halteranlagefläche (8) angeordnet ist.

4. Halter (1) nach einem der vorhergehenden Ansprüche, **dadurch gekennzeichnet, dass** das Abstandselement (7) zumindest einen am Aufnahmeelement (2) angeordneten, ersten Abstandselementschenkel (10) und zumindest einen vom Aufnahmeelement (2) beabstandeten, zweiten Abstandselementschenkel (11) aufweist, wobei die Haupterstreckungsrichtung des ersten Abstandselementschenkels (10) im Querschnitt zu der Haupterstreckungsrichtung des zweiten Abstandselementschenkels (11) um einen Schenkelwinkel (α) verschwenkt ist und die Abstandselementschenkel (10, 11) einen stumpfen Hohlraumwinkel (ω) einschließen.

5. Halter (1) nach Anspruch 4, **dadurch gekennzeichnet, dass** der zweite Abstandselementschenkel (11) im Querschnitt länger als, bevorzugt zumindest doppelt so lang wie, besonders bevorzugt zumindest dreimal so lang wie der erste Abstandselementschenkel (10) ist.

6. Halter (1) nach Anspruch 4 oder 5, **dadurch gekennzeichnet, dass** das Abstands-element (7) zwischen dem ersten Abstandselementschenkel (10) und dem zweiten Abstandselementschenkel (11) einen im Querschnitt zumindest teilweise bogen-, insbesondere kreisbogenförmig ausgebildeten und insbesondere den Hohlraum (9) mit ausbildenden Verbindungsbereich (12) aufweist.

7. Halter (1) nach Anspruch 6, **dadurch gekennzeichnet, dass** der bogenförmige Verbindungsbereich (12) einen Mittelpunktsbogenwinkel (β) einschließt, der größer als, bevorzugt zumindest doppelt so groß wie der Schenkelwinkel (α) ist.

8. Halter (1) nach einem der vorhergehenden Ansprüche, **dadurch gekennzeichnet, dass** das Abstandselement (7) und insbesondere das Aufnahmeelement (2) eine zumindest im Wesentlichen einheitliche Dicke aufweist/en.

9. Halter (1) nach einem der vorhergehenden Ansprüche, **dadurch gekennzeichnet, dass** das Aufnahmeelement (2) den Aufnahmeraum (4) zumindest abschnittsweise, insbesondere zu einem überwiegenden Teil, zumindest im Wesentlichen bogenförmig, insbesondere kreisbogenförmig umgrenzend ausgebildet ist.

10. Halter (1) nach einem der vorhergehenden Ansprüche, **dadurch gekennzeichnet, dass** die Aufnahmeöffnung (3) im Querschnitt eine geringere Erstreckung hat als der Aufnahmeraum (4) in eine zur Aufnahmeöffnung (3) parallele Richtung.

11. Halter (1) nach einem der vorhergehenden Ansprüche, **dadurch gekennzeichnet, dass** das Aufnahmeelement (2) zumindest zwei an die Aufnahmeöffnung (3) angrenzende und zueinander zur Vergrößerung der Aufnahmeöffnung (3) bewegliche Rastelemente (13, 14) aufweist, die zur Verrastung des Rahmens (22) des Flächenelementes (20) im Aufnahmeraum (4) ausgebildet sind.

12. Sonnenschutz- oder Verdunklungsvorrichtung umfassend ein Flächenelement (20) zur Abdeckung einer Fensterscheibe mit einer Bespannung aus einem Bespannungsmaterial (21) und einem randseitig umlaufenden, vorzugsweise als Spannrahmen ausgebildeten und insbesondere zumindest im Wesentlichen rechtwinklig ausgeformten Rahmen (22), der zumindest zwei längliche, insbesondere als Draht ausgebildete Rahmenelemente (23, 24) aufweist, wobei sich je zwei einander zugewandte Rahmenelementenden der zumindest zwei Rahmenelemente (23, 24) in eine von zwei Rahmenhülsen (28) erstrecken, wobei die Rahmenhülsen (28) derart relativ zu zumindest einem der jeweiligen Rahmenelementenden drehbar um eine Längsmittelachse der Rahmenhülse (28) sind, dass sich hierdurch Enden des Flächenelementes (20), an denen sich Breitseiten befinden, zueinander um 180° verdrehen und aufeinander falten lassen, wobei die Sonnenschutz- oder Verdunklungsvorrichtung ferner einen Halter (1) nach einem der Ansprüche 1 bis 11 umfasst, wobei der Rahmen (22) im Aufnahmeraum (4) des Halters (1) angeordnet ist.

13. Sonnenschutz- oder Verdunklungsvorrichtung nach Anspruch 12, **dadurch gekennzeichnet, dass** jedes der Rahmenelemente (23, 24) entlang seiner Längserstreckung eine Spannbiegestelle (26) aufweist, an der das Rahmenelement (23, 24) um weniger als 90°, insbesondere um höchstens 10° insbesondere nach innen gebogen ausgebildet ist.

## Claims

1. Holder (1) for a surface element (20) of a sun protection or darkening device, which is provided for covering a window pane with a covering made of a thin covering material (21) and a frame (22) extending around the edge, preferably designed as a tensioning frame, wherein the holder (1) comprises a receiving element (2) for forming a receiving space (4) delimited by a receiving opening (3), into which receiving space (4) a portion of the frame (22), preferably covered by the covering material (21), is to be inserted through the receiving opening (3) in a receiving direction (5) and against a receiving stop (6) of the receiving element (2) lying opposite to the receiving opening (3), wherein the receiving element (2) is arranged in an intermediate plane space (17) delimited by two planes (15, 16) parallel to the receiving direction (5) and perpendicular to a cross-sectional plane, wherein the holder comprises a spacer element (7) extending away from the receiving element (2) and comprising at least one spacer-element end (19) facing away from the receiving element (2), said spacer-element end (19) being arranged for positioning the surface element (20) in a window frame profile (18) outside the intermediate plane space (17), wherein the spacer element is arranged directly at the receiving stop, wherein the spacer element (7) extends away from the receiving element (2) in a cross-section at an angle to the receiving direction (5), **characterized in that** at least one portion of the spacer element (7) adjacent to the receiving element (2) is angled by at least 60° relative to the receiving direction (5).

2. Holder (1) according to claim 1, **characterized in that** the portion of the spacer element (7) adjacent to the receiving element (2) is angled by at least 75° relative to the receiving direction (5).

3. Holder (1) according to one of the preceding claims, **characterized in that** a hollow space (9) extending perpendicularly to the cross-sectional plane is formed between a holder contact surface (8), which is perpendicular to the cross-section and contacts the holder (1) at at least two points (A, B) that also form its cross-sectional contour and are arranged in particular in mutually opposite end regions of the holder (1), without intersecting the contour, and the holder (1), wherein the receiving space (4) is arranged between the receiving opening (3) and the holder contact surface (8).

4. Holder (1) according to one of the preceding claims, **characterized in that** the spacer element (7) comprises at least one first spacer-element leg (10) arranged on the receiving element (2) and at least one second spacer-element leg (11) spaced apart from the receiving element (2), wherein the main extension direction of the first spacer-element leg (10) is pivoted in the cross-section by a leg angle relative to the main extension direction of the second spacer-element leg (11), and the spacer-element legs (10, 11) enclose an obtuse hollow-space angle (ω).

5. Holder (1) according to claim 4, **characterized in that** the second spacer-element leg (11) is longer in cross-section than, preferably at least twice as long as, and particularly preferably at least three times as long as, the first spacer-element leg (10).

6. Holder (1) according to claim 4 or 5, **characterized in that** the spacer element (7) has, between the first spacer-element leg (10) and the second spacer-element leg (11), a connecting region (12) which is at least partially arcuate in cross-section, in particular circular-arc-shaped, and which in particular also forms the hollow space (9).

7. Holder (1) according to claim 6, **characterized in that** the arcuate connecting region (12) encloses a central arc angle which is greater than, preferably at least twice as large as, the leg angle.

8. Holder (1) according to one of the preceding claims, **characterized in that** the spacer element (7) and in particular the receiving element (2) have an at least substantially uniform thickness.

9. Holder (1) according to one of the preceding claims, **characterized in that** the receiving element (2) is designed such that it delimits the receiving space (4), at least in sections, in particular for the major part, in an at least substantially arcuate manner, in particular in a circular-arc-shaped manner.

10. Holder (1) according to one of the preceding claims, **characterized in that** the receiving opening (3) has, in cross-section, a smaller extent than the receiving space (4) in a direction parallel to the receiving opening (3).

11. Holder (1) according to one of the preceding claims, **characterized in that** the receiving element (2) comprises at least two latching elements (13, 14) adjacent to the receiving opening (3) and movable relative to one another for enlarging the receiving opening (3), said latching elements being designed for latching the frame (22) of the surface element (20) in the receiving space (4).

12. Sun protection or darkening device comprising a surface element (20) for covering a window pane with a covering made of a covering material (21) and a frame (22) extending around the edge, preferably designed as a tensioning frame and in particular shaped at least substantially rectangularly, said frame comprising at least two elongate frame elements (23, 24), in particular designed as wire, wherein in each case two mutually facing frame-element ends of the at least two frame elements (23, 24) extend into one of two frame sleeves (28), wherein the frame sleeves (28) are rotatable relative to at least one of the respective frame-element ends about a longitudinal central axis of the frame sleeve (28) in such a way that ends of the surface element (20), at which broad sides are located, can thereby be twisted relative to one another by 180° and folded onto one another, wherein the sun protection or darkening device further comprises a holder (1) according to one of claims 1 to 11, wherein the frame (22) is arranged in the receiving space (4) of the holder (1).

13. Sun protection or darkening device according to claim 12, **characterized in that** each of the frame elements (23, 24) has, along its longitudinal extent, a tension-bending point (26) at which the frame element (23, 24) is bent by less than 90°, in particular by at most 10°, in particular inwardly

## Revendications

1. Support de montage (1) pour un élément plat (20) d'un dispositif de protection solaire ou d'occultation, qui est pourvu, pour le recouvrement d'une vitre, d'un habillage en un matériau d'habillage (21) mince et d'un cadre (22) périphérique autour des bords, de préférence réalisé sous forme de cadre de serrage, le support de montage (1) présentant un élément de réception (2) pour la réalisation d'un espace de réception (4) délimité par une ouverture de réception (3), dans lequel espace doit être introduit une section du cadre (22), de préférence recouvert du matériau d'habillage (21), à travers l'ouverture de réception (3) dans un sens de réception (5) et contre une butée de réception (6) de l'élément de réception (2) située à l'opposé de l'ouverture de réception (3), l'élément de réception (2) étant agencé dans un espace intermédiaire plan (17) délimité par deux plans (15, 16) parallèles au sens de réception (5) et perpendiculaires à un plan transversal, le support de montage présentant un élément d'écartement (7) s'étendant à partir de l'élément de réception (2) et comprenant au moins une extrémité (19) d'élément d'écartement située à l'opposé de l'élément de réception (2) qui est agencée, pour le positionnement de l'élément plat (20), dans un profilé (18) de châssis de fenêtre en dehors de l'espace intermédiaire plan (17), l'élément d'écartement étant agencé directement au niveau de la butée de réception, l'élément d'écartement (7) s'étendant à partir de l'élément de réception (2) dans une section transversale formant un angle par rapport au sens de réception (5), **caractérisé en ce qu'**au moins une section de l'élément d'écartement (7) adjacente à l'élément de réception (2) forme un angle d'au moins 60° avec le sens de réception (5).

2. Support de montage (1) selon la revendication 1, **caractérisé en ce que** la section de l'élément d'écartement (7) adjacente à l'élément de réception (2) forme un angle d'au moins 75° avec le sens de réception (5).

3. Support de montage (1) selon l'une des revendications précédentes, **caractérisé en ce qu'**un espace creux (9) continu perpendiculaire au plan transversal est réalisé entre une surface d'appui (8) du support de montage, qui est perpendiculaire à la section transversale, qui touche le support de montage (1) en au moins deux points (A, B) formant conjointement le contour de la section transversale et en particulier agencés dans des zones d'extrémité opposées du support de montage (1) et qui ne recoupe pas le contour, et le support de montage (1), l'espace de réception (4) étant agencé entre l'ouverture de réception (3) et la surface d'appui (8) du support de montage.

4. Support de montage (1) selon l'une des revendications précédentes, **caractérisé en ce que** l'élément d'écartement (7) présente au moins une première branche (10) d'élément d'écartement agencée au niveau de l'élément de réception (2) et au moins une deuxième branche (11) d'élément d'écartement éloignée de l'élément de réception (2), la direction d'étendue principale de la première branche (10) d'élément de réception étant pivotée, dans la section transversale par rapport à la direction d'étendue principale de la deuxième branche (11) d'élément d'écartement, d'un angle (α) et les branches (10, 11) d'élément d'écartement formant un angle (ω) obtus d'espace creux.

5. Support de montage (1) selon la revendication 4, **caractérisé en ce que** la deuxième branche (11) d'élément d'écartement est plus longue, dans la section transversale, de préférence au moins deux fois plus longue, de manière particulièrement préférée au moins trois fois plus longue, que la première branche (10) d'élément d'écartement.

6. Support de montage (1) selon la revendication 4 ou 5, **caractérisé en ce que** l'élément d'écartement (7) présente, entre la première branche (10) d'élément d'écartement et la deuxième branche (11) d'élément d'écartement, une zone de liaison (12) réalisée, dans la section transversale, au moins partiellement en forme d'arc, en particulier en forme d'arc de cercle, et formant en particulier conjointement l'espace creux (9).

7. Support de montage (1) selon la revendication 6, **caractérisé en ce que** la zone de liaison (12) en forme d'arc forme en angle (β) au point central de l'arc qui est plus grand, de préférence au moins deux fois plus grand, que l'angle (α).

8. Support de montage (1) selon l'une des revendications précédentes, **caractérisé en ce que** l'élément d'écartement (7) et en particulier l'élément de réception (2) présentent une épaisseur au moins sensiblement uniforme.

9. Support de montage (1) selon l'une des revendications précédentes, **caractérisé en ce que** l'élément de réception (2) est réalisé de manière à entourer l'espace de réception (4) au moins par sections, en particulier pour une partie principale, au moins de manière sensiblement en forme d'arc, en particulier en forme d'arc de cercle.

10. Support de montage (1) selon l'une des revendications précédentes, **caractérisé en ce que** l'ouverture de réception (3) présente, dans la section transversale, une étendue plus petite que celle de l'espace de réception (4) dans une direction parallèle à l'ouverture de réception (3).

11. Support de montage (1) selon l'une des revendications précédentes, **caractérisé en ce que** l'élément de réception (2) présente au moins deux élément d'encliquetage (13, 14) adjacents à l'ouverture de réception (3) et mobiles l'un par rapport à l'autre, pour l'agrandissement de l'ouverture de réception (3), lesquels éléments sont réalisés pour l'encliquetage du cadre (22) de l'élément plat (20) dans l'espace de réception (4).

12. Dispositif de protection solaire ou d'occultation comprenant un élément plat (20) pour le recouvrement d'une vitre, présentant un habillage en un matériau d'habillage (21) et un cadre (22) périphérique autour des bords, de préférence réalisé en forme de cadre de serrage et en particulier au moins de forme sensiblement rectangulaire, qui présente au moins deux éléments (23, 24) de cadre allongés, en particulier en fil, à chaque fois deux extrémités d'élément de cadre orientées l'une vers l'autre desdits au moins deux éléments (23, 24) de cadre s'étendant dans un parmi deux manchons (28) de cadre, les manchons (28) de cadre pouvant tourner par rapport à au moins l'une des extrémités d'élément de cadre respectives autour d'un axe central longitudinal des manchons (28) de cadre de telle sorte que de ce fait, des extrémités de l'élément plat (20), au niveau desquelles se trouvent des bords larges, peuvent tourner de 180° l'une par rapport à l'autre et se laissent replier l'une sur l'autre, le dispositif de protection solaire ou d'occultation comprenant en outre un support de montage (1) selon l'une des revendications 1 à 11, le cadre (22) étant agencé dans l'espace de réception (4) du support de montage (1).

13. Dispositif de protection solaire ou d'occultation selon la revendication 12, **caractérisé en ce que** chaque élément (23, 24) de cadre présente, le long de son étendue longitudinale, un site de flexion de serrage (26) au niveau duquel l'élément (23, 24) de cadre est réalisé de manière cintrée de moins de 90°, en particulier d'au plus 10°, en particulier vers l'intérieur.
